# EUROPÄISCHE PATENTSCHRIFT

(11) **EP 0 924 175 B1**
(45) Veröffentlichungstag und Bekanntmachung des Hinweises auf die Patenterteilung: **10.01.2001**
(21) Anmeldenummer: 98121373.9
(22) Anmeldetag: 10.11.1998
(51) Int. Cl.: C04B 38/10

(54) **Bau-Formteile auf Basis von porösem Material**
Articles comprising porous building materials
Produits moulés fabriqués de matériau de construction moussé

(30) Priorität: 22.12.1997 CH 293797
(43) Veröffentlichungstag der Anmeldung: 23.06.1999
(73) Patentinhaber: Tribelhorn, Johannes, 4410 Liestal (CH)
(72) Erfinder: Tribelhorn, Johannes, 4410 Liestal (CH)
(74) Vertreter: Hotz, Klaus, Dipl.-El.-Ing./ETH

(56) Entgegenhaltungen:
- EP-A- 0 164 433
- EP-A- 0 592 837
- BE-A- 858 184
- DE-A- 2 545 006
- US-A- 5 330 691

## Beschreibung

Die Erfindung betrifft grossporige Bau-Formteile auf der Basis von Zement oder gebranntem Kalk, die wegen ihrer vorteilhaften Kombination von bautechnisch spezifischen Eigenschaften und geringem Gewicht als Leichtbetonelemente speziell für die Modular-Bauweise von Wohnbauten geeignet sind.

Leichtbeton-Bauelemente werden seit langem im Wohnungs- und Industriebau verwendet. Sie sind in der Nachfolge der extrem schweren Vollbetonelemente entwickelt worden, nicht zuletzt, um durch Gewichtsverminderung ihre Handhabung zu erleichtern.

Die im Stand der Technik bekannten Varianten von Leichtbeton-Bauteilen zeigen jedoch bei vermindertem spezifischen Gewicht so grosse Festigkeitsreduktionen, dass solche Bauelemente die heutigen Normen der statischen Festigkeit nicht mehr erreichen. Beispiel dafür ist ***GB A 2 219 548***, das die Herstellung von zellenförmigem Beton beansprucht oder von ***CA 1 283 666***, welches Polystyrol und ***CH 453 998***, welches mineralische Leicht-Füllstoffe oder Glasschaum in solchen Bauteilen schützt.

Innere und äussere Armierungen oder Vergrösserung der Dimensionen als Ausgleich für die Festigkeitsverluste vermindern jedoch die Vorteile der Gewichtsreduktion und der kostengünstigeren Bauweise erheblich.

Die ***EP A1 0 647 603*** beansprucht Bauwerkstoffe die bei Wasser-/Zementfaktoren von weniger als 0,4 durch die Anwendung von Hochturbulenzmischern geschlossene Feinstporen von unter 5 µm aufweisen und anstelle von Sand oder Kies bevorzugt Leichtfüllstoffe enthalten. Die Festigkeiterhöhungen sind jedoch ungenügend und die erreichbaren Dichten liegen deutlich unter 1000 kg/m³.

Ferner ist es aus US-A-5 330 691 bekannt, Leicht-Bauformteile aus Gips dadurch herzustellen, daß einem vorgefertigten Schaum ein Gipsbrei zugemischt wird.

Daneben wird gemäß EP-A-592 837 vorgeschlagen, einen schalldämmenden Schaumstoff durch Mischen eines vorgeschaümten Epoxidharzes mit Zement herzustellen.

Die Aufgabe der vorliegenden Erfindung ist es deshalb, die Nachteile des Standes der Technik zu überwinden und Bau-Formteile zu schaffen, die bei wesentlich geringerem spezifischen Gewicht unterschiedliche bautechnische Anforderungen gleichzeitig erfüllen und trotzdem eine genügende statische Festigkeit aufweisen.

Diese Aufgabe wird durch die grossporigen Bau-Formteile mit den kennzeichnenden Merkmalen des Anspruchs **1** erfüllt.

Die Aufgabe wird insbesondere erfüllt durch die erfindungsgemässen Formteile aus mindestens einer Schicht, bevorzugt aus mehreren fest miteinander verbundenen Schichten, wobei einzelne Schichten bei besonders homogener Verteilung von offenen Poren einer Grösse zwischen 20 und 100 µm eine Trockendichte zwischen ca. 15 und 65 % der normalen Trockendichte für Beton-Bauteile, zum Beispiel 400 bis 1600 kg pro Kubikmeter, aufweisen.

Die Porengrösse, die zwischen 20 und 100µm , bevorzugt zwischen 20 und 50 µm liegt, ist von unerwartet hoher Gleichmässigkeit und führt zu einem Luftanteil in der Schicht, resp. im Formteil von 25 bis 85 Vol.-%.

Die homogene Verteilung der offenen Poren wird durch ein organisches Schaumbildner-Konzentrat auf Proteinbasis ermöglicht, welches vorteilhaft in mindestens 10%iger, bevorzugt in mindestens 5 %iger Verdünnung eingesetzt wird.

Dadurch werden Stahl-Armierungen ganz oder teilweise überflüssig oder können z.B. auf Schichten mit Trage-Funktionen beschränkt bleiben, wobei Rundstahl oder Stahlseil bevorzugt sind.

In vorteilhafter Weise können auch einzelne Schichten oder Bereiche, z.B. auch unterschiedlich, durch Verstärkungsfasern, insbesondere durch Natur- oder Synthesefasern armiert werden.

Als Füllstoff enthalten die erfindungsgemässen Formteile in bevorzugter Weise Kies oder Rundsand, beispielsweise mit 0 bis 3mm Korngrösse und einem Feinanteil unter 20 Gew.%, oder Kunststoff, als Additive Fliessmittel, Verflüssiger und Pigmente und als Bindemittel Zement oder gebrannten Kalk.

Die statische Festigkeit, speziell die Würfeldruckfestigkeit der erfindungsgemässen Formteile, kann in gut reproduzierbarer Weise über die Trockendichte und damit über den Luftanteil bevorzugt in einem Bereich von 1,5 bis 20 N/mm² (Wert nach 28 Tagen), resp. 2,2 bis 28 N/mm² (Wert nach 90 Tagen )eingestellt werden.

In gleicher Weise ist die Wärmeleitzahl von der Trockendichte, resp. dem Luftanteil der Schicht abhängig und liegt vorteilhaft für eine Wandstärke von 35 cm zwischen 0,3 und 1,6 W/m²K.

Dabei ist es von besonderem Vorteil, dass in der sandwichartigen Anordnung von mehreren fest miteinander verbundenen Schichten im Formteil Trage-Schichten mit hoher statischer Festigkeit mit Schichten, z.B. mit Wärmedämm- und/oder Schalldämm-Funktion kombiniert sein können, welche bei wesentlich höherem Luftanteil geringere statische Druck-Festigkeiten aufweisen.

Bevorzugte Ausführungsvarianten bestehen beispielsweise aus Schichten mit Trage-, Wärme- oder Schalldämm- , Schutz- und/oder Dekor-Funktion in beliebiger Anordnung. Dabei kann die Schutzschicht beispielsweise faserarmiert oder mit Kunststoff gefüllt sein und die Dekorschicht Farbpigmente enthalten.

Die erfindungsgemässen Formteile bestehen aus mindestens einer Schicht mit einer Dicke im Bereich von 6 bis 60cm. In Formteilen aus sandwichartig fest miteinander verbundenen Schichten unterschiedlicher Zusammensetzung weisen die einzelnen Schichten bevorzugt Dicken zwischen 0,5 und 35 cm auf, wobei der untere Bereich besonders den Schutz- und Dekorschichten vorbehalten ist.

Die Anzahl der Schichten ist an sich nicht begrenzt. Sie wird durch das Anforderungsprofil an das Bau-Formteil bestimmt.

In besonderen Ausführungsformen sind die Schichten als Bereiche, nebeneinander angeordnet, fest miteinander verbunden.

Die äusseren Abmessung der Formteile sind ebenfalls durch die Anforderungen bestimmt.

Da einer der besonderen Vorteile das problemlose Bearbeiten durch Schneiden, Fräsen, Hobeln oder Bohren ist, empfehlen sich sowohl Abmessungen im Normbereich und sogar im Normstein-Bereich, als auch besonders grosse Standard-Ausführungen, z.B. mit Abmessungen von 10 x 10m. Grundsätzlich ist auch jedes Spezialmass denkbar.

Die Formteile sind somit in besonderer Weise für den modularen Wohnungsbau geeignet. Sie weisen bei guten Festigkeitswerten sehr gute Wärmedämmwerte auf und sind besonders in der Sandwichausführung bruch-, riss- und korrosionsbeständig.

Mit ihrer besonders guten Eignung zum Verkleben erfüllen die erfindungsgemässen Formteile eine weitere Anforderung der heutigen effizienten Bautechnologie in vorteilhafter Weise.

Die Herstellung der erfindungsgemässen grossporigen Bau-Formteile umfasst die Schritte
- getrenntes Mischen der Komponenten
   a) Bindemittel, Füllstoff und (Anmach-)Wasser
   und b) Schaumbildner-Konzentrat und Wasser,
- Mischen der Komponenten
   a) und b) untereinander mit oder ohne Zusatz von
   c) Additiv und
   d) Verstärkungselementen,
- Homogenisieren,
- Formgebung und
- teilweises Aushärten der Mischung,
- Wiederholung der Schritte für jede nächste Schicht
- mit oder ohne Kühlung der geformten Mischung,
- Entformen und
- wahlweises Konfektionieren.

Dabei wird vorteilhaft ein Gesamt Wasser-/Bindemittelverhältnis zwischen 0,45 und 0,57, insbesondere aber, je nach angestrebter Trockendichte ein Verhältnis zwischen 0,45 und 0,50 oder 0,51 und 0,57 gewählt.

Ein besonderer Vorteil ist die einwandfreie Formgebung selbst für dünne, schmale und unüblich geformte Teile infolge der ausgezeichneten Pumpbarkeit und Fliessfähigkeit der Mischung ihrer Komponenten und ihre hervorragende Selbstnivellierung in der Form.

Beispielsweise werden zur Herstellung eines 3-schichtigen Bauteils mit je einer Trage-, Wärmedämm- und Dekor/Schutzschicht eingesetzt:
- für die Trageschicht (Trockendichte 1'200 kg/m³):: 780 kg Sand (0-3mm),
360 kg Portland-Zement,
140 kg Anmachwasser, (unter Beachtung der Sand-Feuchte)
- und 460 l Schaum aus: 35 l Wasser,
0,9 l Schaumbildner-Konzentrat.

Dabei liegt das Wasser-/Zementverhältnis bei 0,48, der Luftanteil bei 46 Vol.-% und es wird eine Nassdichte von ca. 1'315 kg/m³ erreicht. Die Würfeldruckfestigkeit nach 28 Tagen beträgt 6,5 NN/mm² und nach 90 Tagen 9,0 NN/mm². Die Wärmeleitzahl liegt für 35 cm Wandstärke bei 1,15 und der E-Modul bei 4,0 NN// mm²,
- für die Wärmedämmschicht (Trockendichte 600 kg/m³):: 210 kg Sand (0-3mm),
310 kg Portland-Zement,
110 kg Anmachwasser,
- und 715 l Schaum aus: 54 l Wasser,
1,3 l Schaumbildner-Konzentrat.

Dabei liegt das Wasser-/Zementverhältnis bei 0,53, der Luftanteil bei 71 Vol-% und es wird eine Nassdichte von ca. 684 kg/m³ erreicht. Die Wärmeleitzahl in W/m² K liegt bei 0,45. Die Würfeldruckfestigkeit beträgt nach 28 Tagen 2,5 N/mm² und nach 90 Tagen 3,5 N/ mm²,
für die Dekor/Schutzschicht ein Normalbeton aus Weisszement und Feinsand mit ca. 6 Gew.% Verstärkungsfaser zur Erhöhung der Rissbeständigkeit.

Dabei werden die einzelnen Schichten nacheinander in eine Form eingebracht, welche im Bedarfsfall auch Armierungselemente enthält, wobei die Nivellierung in der Regel selbsttätig erfolgt. In der jeweils vorhergehenden Schicht wird durch eine kurze Wartezeit von erfahrungsgemäss zwischen 30 und 60 Minuten eine teilweise Härtung ermöglicht, die der nachträglich aufgebrachten Schicht durch nur noch oberflächliche Vermischung die einwandfreie Verankerung gewährleistet.

Bei der Herstellung von Formteilen mit unterschiedlichen Bereichen werden Abtrennungen in der Form nach dem Einfüllen der verschiedenen Mischungen, bevorzugt unter Erzeugung leichter Turbulenzen, entfernt.

Weitere Zusammensetzungen für Varianten der Schichten sind in Tabelle 1 zusammengefasst:

**Tabelle 1**

| Trockendichte | kg/m³ | 400 | 600 | 800 | 1000 | 1200 | 1400 | 1600 |
|---|---|---|---|---|---|---|---|---|
| Rundsand | kg | -/- | 210 | 420 | 590 | 780 | 950 | 1'130 |
| Zement | kg | 300 | 310 | 320 | 350 | 360 | 380 | 400 |
| Anmachwasser | kg | 110 | 110 | 120 | 130 | 140 | 150 | 160 |
| Schaumbildner (konz.) | l | 1,5 | 1,3 | 1,2 | 1,0 | 0,9 | 0,7 | 0,6 |
| Wasser | l | 60 | 54 | 45 | 42 | 35 | 28 | 21 |
| Schaum | l | 800 | 715 | 630 | 560 | 460 | 370 | 290 |
| Gesamt-Wasser-/Zementfaktor | | 0,57 | 0,53 | 0,51 | 0,49 | 0,48 | 0,47 | 0,45 |
| Luftanteil | % | 80 | 71 | 63 | 54 | 46 | 37 | 29 |
| Nassdichte | kg/m³ | 471 | 684 | 906 | 1'102 | 1315 | 1'508 | 1'711 |
| Würfeldruckfestigkeit (28 Tage) | N/mm² | 1,6 | 2,5 | 3,5 | 4,5 | 6,5 | 12 | 18 |
| Würfeldruckfestigkeit (90 Tage) | N/mm² | 2,5 | 3,5 | 5,0 | 6,3 | 9,0 | 16,8 | 25 |
| Wärmeleitzahl (35 cm Wandstärke) | W/m² K | 0,35 | 0,45 | 0,55 | 0,75 | 1,15 | 1,40 | 1,50 |

Die Erfindung beinhaltet auch die Verwendung der erfindungsgemässen Bau-Formteile im Wohnungsbau als modulare, isolierende, statisch feste und äusserlich gestalt- und konfektionierbare Elemente oder als Norm-Bausteine.

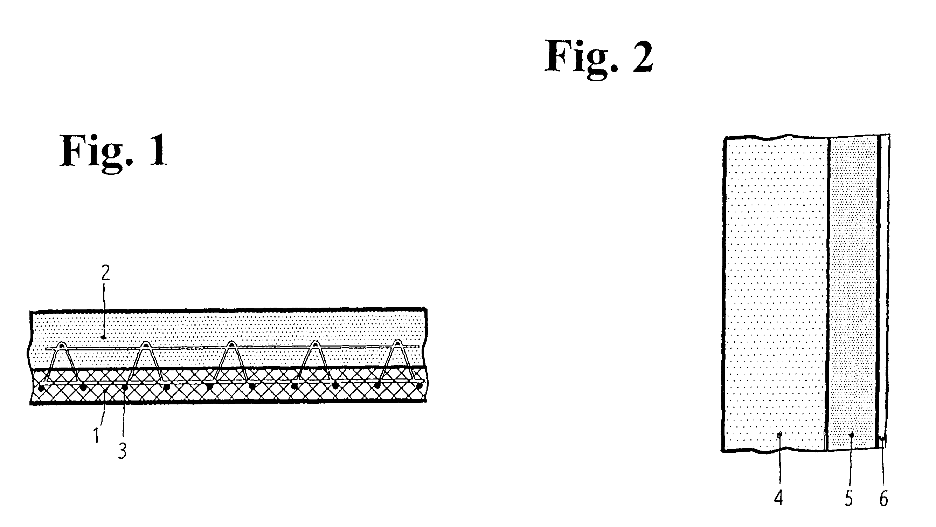

Die Figuren **1** und **2** zeigen zwei Ausführungsbeispiele von mehrschichtigen Bau-Formteilen:
**Fig. 1**: Bau-Formteil für Decken mit einer unteren Trageschicht (1) aus Normalbeton mit Stahlarmierung (3) und einer oberen Wärme-/Schalldämmschicht (2) aus Leichtbeton mit einer Trockendichte im Bereich von 800 bis 1'600 kg/ m³.
**Fig. 2**: Bau-Formteil für Aussenwände aus einer Wärmedämmschicht (4)(aussen) mit einer Trockendichte im Bereich von 200 bis 600 kg/ m³, einer Trageschicht (5)(Mitte) mit einer Trockendichte von 800 bis 1'600 kg/ m³ und einer faserarmierten Schutzschicht (6)(innen) mit einer Trockendichte von 2'300 kg/ m³.

## Patentansprüche

1. Bauformteil mit einer Würfeldruckfestigkeit nach 90 Tagen von 2.2 bis 28 N/mm² und einer Trockendichte von 400 bis 1600 kg/m³, hergestellt durch getrenntes Mischen von
a) Zement u/o gebranntem Kalk, Füllstoff und Anmachwasser und
b) einem Schaumbildner-Konzentrat auf Proteinbasis und Wasser sowie Mischen der Komponenten a) und b) derart, daß im abgebundenem Bauteil eine homogene Porenstruktur vorliegt und die Porengrößen im Bereich von 20 bis 100 µm liegen.

2. Bauformteil gemäss Anspruch **1**,
**dadurch gekennzeichnet, dass** das Bau-Formteil mindestens zwei Schichten aufweist, wobei die Schichten sandwichartig übereinander angeordnet sind, wobei aneinandergrenzende Schichten längs Ihrer Schicht-Haupflächen miteinander verbunden sind.

3. Baüformteil gemäß Anspruch 2, **dadurch gekennzeichnet, daß** die Schichten unterschiedliche Porengrößen, unterschiedliche Trockendichten, unterschiedlich Druckfestigkeiten und Abmessungen aufweisen.

4. Bau-Formteil gemäss Anspruch **2**,
**dadurch gekennzeichnet, dass**
die Schichten als Bereiche nebeneinander angeordnet sind, wobei aneinandergrenzende Schichten längs ihrer Schicht-Seitenflächen miteinander verbunden sind.

5. Bau-Formteil gemäss einem der vorhergehenden Ansprüche,
**dadurch gekennzeichnet, dass**
der Luftanteil in den Schichten zwischen 25 und 85 Vol.-% liegt.

6. Bau-Formteil gemäss einem der vorhergehenden Ansprüche,
**dadurch gekennzeichnet, dass**
Additive ausgewählt aus der Gruppe Fliessmittel, Verflüssiger, Pigmente mit verarbeitet wurden.

7. Bau-Formteil gemäss einem der vorhergehenden Ansprüche,
**dadurch gekennzeichnet, dass**
Verstärkungselemente ausgewählt sind aus der Gruppe Rundstahl, Stahlseil, Natur- und Synthese-Fasern mit verarbeitet wurden.

8. Bau-Formteil gemäss einem der vorhergehenden Ansprüche,
**dadurch gekennzeichnet, dass**
der Füllstoff Sand, Kies oder Kunststoff ist.

9. Bau-Formteil gemäss einem der vorhergehenden Ansprüche,
**dadurch gekennzeichnet, dass** es eine
Wärmeleitzahl für eine 35cm Schicht zwischen 0,30 und 1,6 W/m² K aufweist.

10. Bau-Formteil gemäss einem der vorhergehenden Ansprüche,
**dadurch gekennzeichnet, dass**
einzelne Schichtdicken zwischen 0,5 und 35 cm und Gesamtdicken von 6 bis 60 cm und Abmessungen bis zu 10 x 10 m vorliegen.

11. Bauformteil gemäß einem der vorhergehenden Ansprüche,
**dadurch gekennzeichnet, dass**
bei dessen Herstellung ein Gesamt-Wasser Bindemittelverhältnis zwischen 0,45 und 0,57 eingestellt wurde.

## Claims

1. Structural preform exhibiting a test cube pressure resistance of 2.2 to 28 N/mm² after 90 days and a density of 400 to 1600kg/m³ when dry, made by separately mixing
a) cement and/or caustic lime, filler and mixing water, and
b) a protein-based foamer concentrate and water, and mixing components a) and b) in such a way that there is a homogeneous pore structure in the structural member once the latter has set and the pore sizes are within the range 20 to 100µm.

2. Structural preform according to claim **1**, characterised in that the structural preform has at least two layers, the layers being arranged one above the other in the manner of a sandwich, with contiguous layers being joined to one another along the principal surfaces thereof.

3. Structural preform according to claim **2**,characterised in that the layers have different pore sizes, different densities when dry, different pressure resistances and dimensions.

4. Structural preform according to claim **2**, characterised in that the layers are arranged as zones alongside one another, with contiguous layers being joined to one another along the lateral surfaces thereof.

5. Structural preform according to any of the preceding claims, characterised in that the proportion of air in the layers is between 25 and 85% by volume.

6. Structural preform according to any of the preceding claims, characterised in that additives selected from the group comprising flow agents, liquefiers and pigments are co-processed.

7. Structural preform according to any of the preceding claims, characterised in that reinforcing elements selected from the group comprising rod steel, steel cable, natural and synthetic fibres are co-processed.

8. Structural preform according to any of the preceding claims, characterised in that the filler is sand, gravel or plastic.

9. Structural preform according to any of the preceding claims, characterised in that it exhibits a coefficient of thermal conduction of between 0.30 and 1.6 W/m² in respect of a 35 cm layer.

10. Structural preform according to any of the preceding claims, characterised by individual layer thicknesses of between 0.5 and 35 cm and overall thicknesses of 6 to 60 cm and dimensions of up to 10 x 10 m.

11. Structural preform according to any of the preceding claims, characterised in that an overall water/binder ratio of between 0.45 and 0.57 is used in the manufacture thereof.

## Revendications

1. Élément de construction façonné présentant une résistance à l'écrasement d'un cube de 2,2 à 28 N/mm² après 90 jours et une densité sèche de 400 à 1600 kg/m³, fabriqué en mélangeant séparément
a) du ciment et/ ou de la chaux vive, une matière de remplissage et de l'eau de gâchage et
b) un concentré d'agent moussant à base de protéines et de l'eau, et
en mélangeant les composants a) et b) de façon à obtenir, dans l'élément de construction durci, une structure de pores homogène, avec une grosseur de pores comprise entre 20 et 100 µm.

2. Élément de construction façonné suivant la revendication **1**,
**caractérisé en ce que**
l'élément de construction façonné comprend au moins deux couches, les couches étant disposées en sandwich l'une au-dessus de l'autre, et les couches contiguës étant jointes l'une à l'autre le long de leur surface principale.

3. Élément de construction façonné suivant la revendication **2**,
**caractérisé en ce que**
les couches présentent différentes grosseurs de pores, différentes densités sèches, différentes résistances à l'écrasement et différentes tailles.

4. Élément de construction façonné suivant la revendication **2**,
**caractérisé en ce que**
les couches sont disposées en zones parallèles, les couches contiguës étant jointes l'une à l'autre le long de leur face latérale.

5. Élément de construction façonné suivant l'une des revendications précédentes,
**caractérisé en ce que**
la proportion d'air, dans les couches, représente entre 25 et 85 % du vol.

6. Élément de construction façonné suivant l'une des revendications précédentes,
**caractérisé en ce que**
des additifs, choisis dans la catégorie des solvants, des fluidifiants et des pigments, ont été employés pour sa fabrication.

7. Élément de construction façonné suivant l'une des revendications précédentes,
**caractérisé en ce que**
des éléments de renforcement, choisis dans la catégorie de l'acier rond, des câbles en acier et des fibres naturelles et synthétiques, ont été employés pour sa fabrication.

8. Élément de construction façonné suivant l'une des revendications précédentes,
**caractérisé en ce que**
la matière de remplissage est faite de sable, de gravier ou de matière synthétique.

9. Élément de construction façonné suivant l'une des revendications précédentes,
**caractérisé en ce qu'il**
présente une conductivité thermique, pour une couche de 35 cm, située entre 0,30 et 1,6 W/m².

10. Élément de construction façonné suivant l'une des revendications précédentes,
**caractérisé en ce que**
ses différentes épaisseurs de couches se situent entre 0,5 et 35 cm, son épaisseur totale va de 6 à 60 cm et ses dimensions sont au maximum de 10 x 10 m.

11. Élément de construction façonné suivant l'une des revendications précédentes,
**caractérisé en ce que**
lors de sa fabrication, on a déterminé un rapport total eau/ liant allant de 0,45 à 0,57.
